# EUROPÄISCHE PATENTSCHRIFT

(11) **EP 2 473 386 B1**
(45) Veröffentlichungstag und Bekanntmachung des Hinweises auf die Patenterteilung: **30.07.2014**
(21) Anmeldenummer: 10751905.0
(22) Anmeldetag: 31.08.2010
(51) Int. Cl.: B60W 10/04, B60W 10/26, B60W 20/00, B60W 10/30, B60K 25/00

(54) **Verfahren zum Betreiben eines Antriebsstrangs**
Method for operating a drivetrain
Procédé pour entraîner une chaîne cinématique

(30) Priorität: 02.09.2009 DE 102009029119
(43) Veröffentlichungstag der Anmeldung: 11.07.2012
(73) Patentinhaber: ZF Friedrichshafen AG, 88038 Friedrichshafen (DE)
(72) Erfinder: BANERJEE, Alexander, 88094 Oberteuringen (DE); AMANN, Notker, 88045 Friedrichshafen (DE)
(86) Internationale Anmeldenummer: PCT/EP2010/062701
(87) Internationale Veröffentlichungsnummer: WO 2011/026832

(56) Entgegenhaltungen:
- WO-A1-2004/000597
- WO-A1-2007/043953
- JP-A- 2008 280 178
- US-A- 5 345 761
- US-A1- 2006 052 215

## Beschreibung

Die Erfindung betrifft ein Verfahren zum Betreiben eines Antriebsstrangs eines Kraftfahrzeugs nach dem Oberbegriff des Anspruchs 1.

Die Hauptkomponenten eines Antriebsstrangs sind ein Antriebsaggregat und ein Getriebe. Das Getriebe wandelt Drehzahlen und Drehmomente und stellt so ein Zugkraftangebot des Antriebsaggregats an einem Abtrieb des Antriebsstrangs bereit. Die hier vorliegende Erfindung betrifft ein Verfahren zum Betreiben eines Antriebsstrangs mit einem als Hybridantrieb ausgebildeten Antriebsaggregat und mindestens einen getriebeseitigen oder antriebsaggregatseitigen Nebenabtrieb.

Der Hybridantrieb eines solchen Antriebsstrangs umfasst einen Verbrennungsmotor und eine elektrische Maschine, wobei die elektrische Maschine des Hybridantriebs generatorisch oder motorisch betrieben werden kann. Im generatorischen Betrieb der elektrischen Maschine des Hybridantriebs wird ein elektrischer Energiespeicher des Antriebsstrangs stärker aufgeladen und im motorischen Betrieb der elektrischen Maschine des Hybridantriebs wird der elektrische Energiespeicher des Antriebsstrangs stärker entladen.

Ein Nebenabtrieb wird auch als Power Take Out (PTO) bezeichnet, wobei ein Nebenabtrieb getriebeseitig oder antriebsaggregatseitig Leistung entnimmt, die dann am Abtrieb nicht als Zugkraftangebot zur Verfügung steht. Bei einem Nebenabtrieb kann es sich zum Beispiel um ein Kühlaggregat eines Kühlfahrzeugs oder eine hydraulische Presse eines Müllfahrzeugs oder einen hydraulisch betätigten Kran eines Nutzkraftwagens oder dergleichen handeln.

Bislang bereitet es Schwierigkeiten, einen Antriebsstrang mit einem Hybridantrieb und mindestens einem Nebenabtrieb effizient zu betreiben.

Die WO 2007/043953 A1 beschreibt ein Verfahren zum Betreiben eines Antriebsstrangs eines Fahrzeugs, wobei der Antriebsstrang als Antriebsaggregat einen Hybridantrieb mit einem Verbrennungsmotor und einer elektrischen Maschine, einen im generatorischen Betrieb des elektrischen Maschine des Hybridantriebs aufladbaren und im motorischen Betrieb der elektrischen Maschine des Hybridantriebs entladbaren elektrischen Energiespeicher, ein zwischen den Hybridantrieb und einen Abtrieb geschaltetes Getriebe und mindestens einen antriebsaggregatseitigen Nebenabtrieb aufweist, wobei der Nebenabtrieb innerhalb vom Nebenabtrieb abhängiger Funktionsfähigkeitsgrenzen mit einem variablen Energiebedarf betreibbar ist, wobei abhängig vom aktuellen Betriebszustand des Nebenabtriebs im Antriebsstrang zur Verfügung stehende und nicht am Abtrieb benötigte Energie unter Umgehung des elektrischen Energiespeichers im Nebenabtrieb gespeichert wird.

Hiervon ausgehend liegt der vorliegenden Erfindung das Problem zu Grunde, ein neuartiges Verfahren zum Betreiben eines Antriebsstrangs eines Kraftfahrzeugs zu schaffen.

Dieses Problem wird durch ein Verfahren zum Betreiben eines Antriebsstrangs eines Kraftfahrzeugs gemäß Anspruch 1 gelöst. Erfindungsgemäß wird abhängig vom aktuellen Betriebszustand des Hybridantriebs und/oder abhängig vom aktuellen Betriebszustand des elektrischen Energiespeichers und/oder abhängig vom aktuellen Betriebszustand des Nebenabtriebs im Antriebstrang zur Verfügung stehende und nicht am Abtrieb als Zugkraftangebot benötigte Energie unter Umgehung des elektrischen Energiespeichers im Nebenabtrieb gespeichert.

Die hier vorliegende Erfindung ermöglicht einen effizienten Betrieb eines Antriebsstrangs mit einem als Hybridantrieb ausgebildeten Antriebsaggregat und mit mindestens einem Nebenabtrieb. Abhängig vom aktuellen Betriebszustand des Hybridantriebs und/oder abhängig vom aktuellen Betriebszustand des elektrischen Energiespeichers und/oder abhängig vom aktuellen Betriebszustand des Nebenabtriebs wird im Antriebsstrang zur Verfügung stehende Energie bzw. Leistung, die am Abtrieb nicht als Zugkraftangebot benötigt wird, unter Umgehung des elektrischen Energiespeichers im Nebenabtrieb gespeichert.

Die Umgehung des elektrischen Energiespeichers verfügt über den Vorteil, dass der Energiedurchsatz durch denselben kleiner wird und damit der elektrische Energiespeicher geschont werden kann. Weiterhin wird durch die Speicherung von Energie im Nebenabtrieb eine Energiespeicherkapazität des Antriebsstrangs vergrößert, und zwar über den durch den elektrischen Energiespeicher bereitgestellten Umfang hinaus. Dies entspricht sozusagen einer virtuellen Vergrößerung der Speicherkapazität des elektrischen Energiespeichers.

Bevorzugte Weiterbildungen der Erfindung ergeben sich aus den Unteransprüchen und der nachfolgenden Beschreibung. Ein Ausführungsbeispiel der Erfindung wird, ohne hierauf beschränkt zu sein, an Hand der Zeichnung näher erläutert. Dabei zeigt:
- Fig. 1: ein exemplarisches Antriebsstrangschema eines Kraftfahrzeugs, bei welchem das erfindungsgemäße Verfahren einsetzbar ist;
- Fig. 2: ein Blockschaltbild eines Antriebsstrangs zur Verdeutlichung des erfindungsgemäßen Verfahrens.

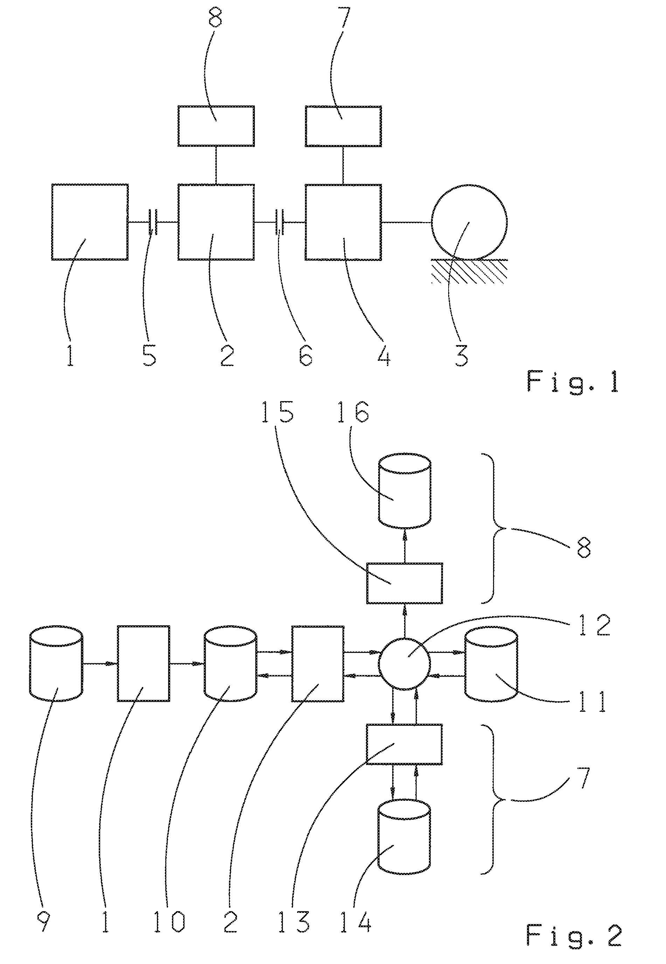

Die hier vorliegende Erfindung betrifft ein Verfahren zum Betreiben eines Antriebsstrangs mit einem Hybridantrieb und mindestens einem Nebenabtrieb. Fig. 1 zeigt stark schematisiert ein Antriebsstrangsschema eines Antriebsstrangs, bei welchem das erfindungsgemäße Verfahren zum Einsatz kommen kann. So verfügt der in Fig. 1 gezeigte Antriebsstrangs über einen Hybridantrieb, der von einem Verbrennungsmotor 1 und einer elektrischen Maschine 2 gebildet wird, wobei zwischen den Hybridantrieb, nämlich die elektrische Maschine 2 desselben, und einen Abtrieb 3 des Antriebsstrangs ein Getriebe 4 geschaltet ist. Zwischen den Verbrennungsmotor 1 und die elektrische Maschine 2 kann nach dem gezeigten Ausführungsbeispiel eine Kupplung 5 geschaltet sein. Ebenso ist im gezeigten Ausführungsbeispiel zwischen die elektrische Maschine 2 und das Getriebe 4 eine Kupplung 6 geschaltet, wobei die Kupplung 6 ein Anfahrelement bereitstellt und auch getriebeintern sein kann.

Der Antriebsstrang der Fig. 1 verfügt weiterhin über zwei Nebenabtriebe, nämlich über einen getriebeseitigen Nebenabtrieb 7 und einen antriebsaggregatseitigen Nebenabtrieb 8. Der getriebeseitige Nebenabtrieb 7 entnimmt vom Getriebe 4 Leistung, die dann am Abtrieb 3 nicht als Zugkraftangebot zur Verfügung steht. Der antriebsaggregatseitige Nebenabtrieb 8 entnimmt vom Hybridantrieb, nämlich von der elektrischen Maschine 2 desselben, Leistung.

Fig. 2 zeigt ein weiteres Blockschaltbild für den Antriebsstrang der Fig. 1, wobei in Fig. 1 neben bereits erwähnten Baugruppen, nämlich neben dem Verbrennungsmotor 1, der elektrischen Maschine 2 und den beiden Nebenabtrieben 7 und 8, Energiespeicher gezeigt sind. So wird in einem Kraftstofftank 9 des Antriebsstrangs Kraftstoff bereit gehalten, der vom Verbrennungsmotor 1 in kinetische Energie des Kraftfahrzeugs gewandelt wird, wobei eine Masse 10 des Kraftfahrzeugs die kinetische Energie desselben speichert.

Die kinetische Energie der Fahrzeugmasse 10 kann auch von der elektrische Maschine 2 des Hybridantriebs gesteigert werden, wozu die elektrische Maschine 2 einen elektrischen Energiespeicher 11 des Antriebstrangs stärker entlädt. Zwischen die elektrische Maschine 2 und den elektrischen Energiespeicher 11 ist gemäß Fig. 2 ein elektrischer Zwischenkreis 12, der als Gleichstromzwischenkreis ausgeführt ist, geschaltet. Wie den Pfeilen der Fig. 2 entnommen werden kann, kann im generatorischen Betrieb der elektrischen Maschine 2 kinetische Energie der Fahrzeugmasse 10 in elektrische Energie zum stärkeren Aufladen des elektrischen Energiespeichers 11 gewandelt werden, wobei das Entladen des elektrischen Energiespeichers 11 und das Aufladen desselben jeweils über den elektrischen Zwischenkreis 12 erfolgt.

Fig. 2 zeigt weiterhin Details des getriebeseitigen Nebenabtriebs 7 sowie des antriebsaggregatseitigen Nebenabtriebs 8. Exemplarisch soll davon ausgegangen werden, dass es sich beim getriebeseitigen Nebenabtrieb 7 zum Beispiel um einen hydraulisch betätigten Nebenabtrieb handelt, wobei der hydraulisch betätigte Nebenabtrieb 7 eine elektrisch angetriebene Hydraulikpumpe 13 umfasst, die vom elektrischen Zwischenkreis 12 mit elektrischer Energie versorgt wird, und die elektrische Energie in hydraulische Energie wandeln kann, die in einem Hydraulikspeicher 14 des Nebenabtriebs 7 speicherbar ist. Gemäß den Pfeilen der Fig. 2 kann auch hydraulische Energie in elektrische Energie gewandelt werden.

Der antriebsaggregatseitige Nebenabtrieb 8 umfasst zum Beispiel ein Kühlaggregat 15, das vom elektrischen Zwischenkreis 12 mit elektrischer Energie versorgt wird, wobei das Kühlaggregat 15 einen Kühlraum 16 des Antriebsstrangs kühlt, der auch als Energiespeicher, nämlich als thermischer Energiespeicher 16, fungiert.

Im Sinne der hier vorliegenden Erfindung wird vorgeschlagen, einen solchen Antriebsstrang derart zu betreiben, dass abhängig vom aktuellen Betriebszustand des Hybridantriebs, nämlich abhängig vom aktuellen Betriebszustand des Verbrennungsmotors 1 und der elektrischen Maschine 2 desselben, und/oder abhängig vom aktuellen Betriebszustand des elektrischen Energiespeichers 11 und/oder abhängig vom aktuellen Betriebszustand des jeweiligen Nebenaggregats 7 bzw. 8 im Antriebsstrang zur Verfügung stehende und nicht am Abtrieb 3 als Zugkraftangebot benötigte Energie unter Umgehung des elektrischen Energiespeichers 11 im Nebenabtrieb 7 und/oder 8 gespeichert wird.

Dann, wenn, wie in Fig. 2 dargestellt, der Nebenabtrieb 8 ein der Kühlung des Kühlraum 16 dienendes Kühlaggregat 15 umfasst, kann nicht am Abtrieb 3 benötigte Energie unter Umgehung des elektrischen Energiespeichers 11 vom Kühlaggregat 15 zur Kühlung des Kühlraums 16 innerhalb zulässiger Temperaturgrenzen desselben genutzt werden, um so die nicht am Abtrieb benötigte Energie im Kühlraum 16 thermisch zu speichern. So ist zum Beispiel der Betrieb des Kühlraums ohne Funktionseinbußen innerhalb eines definierten Temperaturbereichs zulässig, sodass im Antriebsstrang zur Verfügung stehende, überschüssige Energie, die nicht als Zugkraftangebot benötigt wird, genutzt werden kann, um den Kühlraum unter Umgehung des elektrischen Energiespeichers 11 innerhalb des zulässigen Temperaturbereichs stärker abzukühlen. Die Temperaturgrenzen sind Funktionsfähigkeitsgrenzen des Kühlraums 16 bzw. Kühlaggregat 15.

Im Fall des hydraulisch betätigten Nebenabtriebs 7 kann nicht am Abtrieb benötigte Energie ebenfalls unter Umgehung des elektrischen Energiespeichers 11 ohne Funktionseinbußen zur Erhöhung eines Arbeitsdrucks innerhalb zulässiger Druckgrenzen im Hydraulikspeicher 14 des Nebenabtriebs 8 genutzt werden. Die Druckgrenzen sind Funktionsfähigkeitsgrenzen des hydraulisch betätigten Nebenabtriebs 7.

Ebenso ist es möglich, dass dann, wenn der Nebenabtrieb 8 ein der Kühlung des Verbrennungsmotors 1 dienender Kühllüfter ist, nicht am Abtrieb 3 benötigte Energie unter Umgehung des elektrischen Energiespeichers 11 vom Kühllüfter zur Abkühlung des Verbrennungsmotors 1 innerhalb zulässiger Temperaturgrenzen genutzt wird, um so die nicht am Abtrieb 3 benötigte Energie zur Verbrennungsmotorkühlung thermisch zu nutzen, nämlich als Kühlleistung in der Masse des Verbrennungsmotors 1 thermisch zu speichern.

Dann, wenn der Nebenabtrieb 8 ein der Heizung eines Verbrennungsmotors 1 dienendes Heizaggregat ist, kann nicht am Abtrieb 3 benötigte Energie unter Umgehung des elektrischen Energiespeichers 11 vom Heizaggregat zur Aufheizung des Verbrennungsmotors 1 innerhalb zulässiger Temperaturgrenzen genutzt werden, um so die nicht am Abtrieb 3 benötigte Energie zur Verbrennungsmotoraufheizung thermisch zu nutzen, nämlich als Heizleistung in der Masse des Verbrennungsmotors 1 thermisch zu speichern

Dann, wenn der Nebenabtrieb 8 ein der Heizung oder Kühlung eines Fahrgastraums dienendes Klimagerät ist, kann nicht am Abtrieb 3 benötigte Energie unter Umgehung des elektrischen Energiespeichers 11 vom Klimagerät zur Heizung oder Kühlung des Fahrgastraums innerhalb zulässiger Temperaturgrenzen genutzt werden, um so die nicht am Abtrieb 3 benötigte Energie im Fahrgastraums zu nutzen, nämlich thermisch zu speichern.

Es ist demnach eine Erkenntnis der hier vorliegenden Erfindung, dass ein Antriebsstrang mit einem Hybridantrieb und einem Nebenabtrieb, das innerhalb von vom Nebenabtrieb abhängiger Funktionsfähigkeitsgrenzen ohne Funktionseinbußen mit einem variablen Energiebedarf betreibbar ist, dadurch effizient betrieben werden kann, dass abhängig vom Betriebszustand des Hybridantriebs und/oder abhängig vom Betriebszustand des elektrischen Energiespeichers und/oder abhängig vom Betriebszustand des Nebenabtriebs Energie, die am Abtrieb 3 nicht als Antriebsleistung benötigt wird, unter Umgehung des elektrischen Energiespeichers 11 in mindestens einem Nebenabtrieb 7 und/ oder 8 gespeichert werden kann. Hierdurch wird der elektrische Energiespeicher 11 geschont, da der Energiedurchsatz durch denselben verringert wird.

Ferner wird hierdurch eine virtuelle Vergrößerung der Kapazität des elektrischen Energiespeichers 11 erzielt, da überschüssige Energie, die nicht als Antriebsleistung benötigt wird, nicht nur im elektrischen Energiespeicher 11, sondern auch in Energiespeichern der Nebenaggregate 7 und/oder 8 gespeichert werden kann. Die Nebenaggregate verfügen demnach über einen variablen Leistungsbedarf, um die Nebenaggregate innerhalb zulässiger Funktionsfähigkeitsgrenzen ohne Funktionseinbußen zu betreiben. Die Speicherung von Energie unter Umgehung des elektrischen Energiespeichers 11 in einem oder mehreren Nebenaggregaten erfolgt dabei unter Berücksichtigung und Einhaltung der nebenaggregatspezifischen Funktionsfähigkeitsgrenzen.

Nach der hier vorliegenden Erfindung wird abhängig vom aktuellen Betriebszustand des Hybridantriebs, nämlich abhängig vom aktuellen Betriebszustand des Verbrennungsmotors 1 und der elektrischen Maschine 2, und/oder abhängig vom aktuellen Betriebszustand des elektrischen Energiespeichers 11 und/oder abhängig vom aktuellen Betriebszustand des oder jeden Nebenabtriebs eine Energiebilanz über den gesamten Antriebsstrang ermittelt.

Auf Grundlage dieser Energiebilanz wird nicht am Abtrieb 3 benötigte Energie unter Gewährleistung eines optimalen Gesamtwirkungsgrads des Antriebsstrangs im elektrischen Energiespeicher 11 und/oder unter Umgehung des elektrischen Energiespeichers 11 im jeweiligen Nebenabtrieb 7 und/oder 8 gespeichert. Hierdurch wird eine hohe Energieeffizienz beim Betreiben des Antriebsstrangs gewährleistet, wobei hierbei der Wirkungsgrad jedes einzelnen beteiligten Aggregats, also des Verbrennungsmotors 1 sowie der elektrischen Maschine 2 sowie des elektrischen Energiespeichers 11 sowie der Nebenabtriebe 7 und 8, berücksichtigt wird.

Bei der Bestimmung der Energiebilanz zur Gewährleistung eines optimalen Gesamtwirkungsgrads des Antriebsstrangs werden nicht nur die Wirkungsgrade der beteiligten Aggregate berücksichtigt, vielmehr werden auch die Speicherkapazitäten und Zustandsgrößen der jeweiligen Energiespeicher sowie die vorhandenen Freiheitsgrade bzw. Funktionsfähigkeitsgrenzen der jeweiligen Nebenabtriebe berücksichtigt. Vorzugsweise wird Energie in demjenigen Energiespeicher gespeichert, der die aktuell zur Verfügung stehende Energie über den gesamten Antriebsstrang gesehen wirkungsgradoptimal speichern kann.

In Folge der ermittelten Energiebilanz kann zur Bereitstellung eines optimalen Gesamtwirkungsgrads des Antriebsstrangs zum Beispiel ein Lastbetriebspunkt des Verbrennungsmotors angehoben werden, nämlich dann, wenn bei der Energiebilanz festgestellt wird, dass unter Erhöhung des Lastbetriebspunkts des Verbrennungsmotors der Gesamtwirkungsgrad des Antriebsstrangs steigt.

Bei der Erhöhung eines Lastbetriebspunkts kann dann überschüssige, vom Verbrennungsmotor 1 bereitgestellte Energie zum Laden der unterschiedlichen vorhandenen Energiespeicher genutzt werden.

Weiterhin kann auf Grundlage der ermittelten Energiebilanz zum Beispiel bei hohen Fahrgeschwindigkeiten des Antriebsstrangs dem Nebenabtrieb keine weitere Energie zugeführt werden, und zwar wiederum innerhalb zulässiger Funktionsfähigkeitsgrenzen des jeweiligen Nebenabtriebs, um so den Energiespeicher des jeweiligen Nebenabtriebs stärker zu entladen und für bei hohen Fahrgeschwindigkeiten zu erwartende Bremsenergie, die beim Rekuperieren in elektrische Energie gewandelt wird, Speicherkapazität im jeweiligen Energiespeicher zu schaffen. Auf diese Art und Weise kann dann zum Beispiel beim Bremsen durch Rekuperieren bereitgestellte elektrische Energie unter Umgehung des elektrischen Energiespeichers 11 genutzt werden, um zum Beispiel beim Nebenabtrieb 7 über die Hydraulikpumpe 13 den Arbeitsdruck im Hydraulikspeicher 14 zu erhöhen oder für den Nebenabtrieb 8 durch Betreiben des Kühlaggregats 15 die Temperatur im Kühlraum 16 zu reduzieren. Auf diese Art und Weise kann dann vorausschauend bei hohen Fahrgeschwindigkeiten eine Umgehung des elektrischen Energiespeichers 11 eingeplant werden.

### Bezugszeichen

- 1: Verbrennungsmotor
- 2: elektrische Maschine
- 3: Abtrieb
- 4: Getriebe
- 5: Kupplung
- 6: Kupplung
- 7: getriebeseitiger Nebenabtrieb
- 8: motorseitiger Nebenabtrieb
- 9: Kraftstofftank
- 10: Fahrzeugsmasse
- 11: elektrischer Energiespeicher
- 12: Zwischenkreis
- 13: Hydraulikpumpe
- 14: hydraulischer Energiespeicher
- 15: Kühlaggregat
- 16: thermischer Energiespeicher

## Patentansprüche

1. Verfahren zum Betreiben eines Antriebsstrangs eines Kraftfahrzeugs, wobei der Antriebsstrang als Antriebsaggregat einen Hybridantrieb mit einem Verbrennungsmotor (1) und einer elektrischen Maschine (2), einen im generatorischen Betrieb der elektrischen Maschine (2) des Hybridantriebs aufladbaren und im motorischen Betrieb der elektrischen Maschine (2) des Hybridantriebs entladbaren elektrischen Energiespeicher (11), ein zwischen den Hybridantrieb und einen Abtrieb (3) geschaltetes Getriebe (4) und mindestens einen getriebeseitigen und/ oder antriebsaggregatseitigen Nebenabtrieb (7, 8) aufweist, wobei der mindestens eine Nebenabtrieb (7, 8) innerhalb vom Nebenabtrieb (7, 8) abhängiger Funktionsfähigkeitsgrenzen mit einem variablen Energiebedarf betreibbar ist, **dadurch gekennzeichnet, dass** abhängig vom aktuellen Betriebszustand des Hybridantriebs und/oder abhängig vom aktuellen Betriebszustand des elektrischen Energiespeichers (11) und/oder abhängig vom aktuellen Betriebszustand des mindestens einen Nebenabtriebs (7, 8)
- eine Energiebilanz über den gesamten Antriebsstrang ermittelt wird und
- auf Grundlage der ermittelten Energiebilanz nicht am Abtrieb benötigte Energie unter Berücksichtigung
- des Wirkungsgrads des Verbrennungsmotors (1), der elektrischen Maschine (2), des elektrischen Energiespeichers (11) sowie des mindestens einen Nebenabtriebs (7, 8) und
- der Speicherkapazität und Zustandsgrößen des Energiespeichers sowie der Funktionsfähigkeitsgrenzen des mindestens einen Nebenabtriebs
entsprechend im elektrischen Energiespeicher (11) und/ oder unter Umgehung des elektrischen Energiespeichers (11) im Nebenabtrieb (7, 8) derart gespeichert wird, dass ein optimaler Gesamtwirkungsgrad des Antriebsstrangs gewährleistet ist.

2. Verfahren nach Anspruch 1, **dadurch gekennzeichnet, dass** dann, wenn der Nebenabtrieb (7, 8) ein der Kühlung eines Kühlraums (16) dienendes Kühlaggregat (15) ist, nicht am Abtrieb (3) benötigte Energie unter Umgehung des elektrischen Energiespeichers (11) vom Kühlaggregat (15) zur Abkühlung des Kühlraums (16) innerhalb zulässiger Temperaturgrenzen genutzt wird, um so die nicht am Abtrieb benötigte Energie im Kühlraum (16) thermisch zu speichern.

3. Verfahren nach Anspruch 1, **dadurch gekennzeichnet, dass** dann, wenn der Nebenabtrieb (7, 8) ein der Kühlung eines Verbrennungsmotors (1) dienender Kühllüfter ist, nicht am Abtrieb (3) benötigte Energie unter Umgehung des elektrischen Energiespeichers (11) vom Kühllüfter zur Abkühlung des Verbrennungsmotors (1) innerhalb zulässiger Temperaturgrenzen genutzt wird, um so die nicht am Abtrieb (3) benötigte Energie zur Verbrennungsmotorkühlung thermisch zu nutzen.

4. Verfahren nach Anspruch 1, **dadurch gekennzeichnet, dass** dann, wenn der Nebenabtrieb (7, 8) ein der Heizung eines Verbrennungsmotors (1) dienendes Heizaggregat ist, nicht am Abtrieb (3) benötigte Energie unter Umgehung des elektrischen Energiespeichers (11) vom Heizaggregat zur Aufheizung des Verbrennungsmotors (1) innerhalb zulässiger Temperaturgrenzen genutzt wird, um so die nicht am Abtrieb (3) benötigte Energie zur Verbrennungsmotoraufheizung thermisch zu nutzen.

5. Verfahren nach Anspruch 1, **dadurch gekennzeichnet, dass** dann, wenn der Nebenabtrieb (7, 8) ein der Heizung oder Kühlung eines Fahrgastraums dienendes Klimagerät ist, nicht am Abtrieb (3) benötigte Energie unter Umgehung des elektrischen Energiespeichers (11) vom Klimagerät zur Heizung oder Kühlung des Fahrgastraums innerhalb zulässiger Temperaturgrenzen genutzt wird, um so die nicht am Abtrieb (3) benötigte Energie im Fahrgastraums zu nutzen.

6. Verfahren nach Anspruch 1, **dadurch gekennzeichnet, dass** dann, wenn der Nebenabtrieb (7, 8) ein hydraulisch oder pneumatisch betätigter Nebenabtrieb (7, 8) ist, nicht am Abtrieb (3) benötigte Energie unter Umgehung des elektrischen Energiespeichers (11) zur Erhöhung eines Arbeitsdrucks innerhalb zulässiger Druckgrenzen in einem Hydraulikspeicher (14) oder Pneumatikspeicher des Nebenabtriebs (7, 8) genutzt wird.

7. Verfahren nach einem der vorhergehenden Ansprüche, **dadurch gekennzeichnet, dass** auf Grundlage der Energiebilanz ein Lastbetriebspunkt des Verbrennungsmotors (1) angehoben wird.

8. Verfahren nach Anspruch 7, **dadurch gekennzeichnet, dass** auf Grundlage der Energiebilanz bei hohen Fahrgeschwindigkeiten innerhalb der zulässigen Funktionsfähigkeitsgrenzen des jeweiligen Nebenabtriebs (7, 8) demselben keine weitere Energie zugeführt wird.

## Claims

1. Method for operating a drive train of a motor vehicle, wherein the drive train has, as a drive assembly, a hybrid drive with an internal combustion engine (1) and an electric machine (2), an electric energy store (11) which can be charged in the generator mode of the electric machine (2) of the hybrid drive and can be discharged in the motor mode of the electric machine (2) of the hybrid drive, a transmission (4) which is connected between the hybrid drive and a power take-off (3) and at least one transmission-side and/or drive-assembly-side secondary power take-off (7, 8), wherein the at least one secondary power take-off (7, 8) can be operated with a variable energy demand within functional capability limits which are dependent on the secondary power take-off (7, 8), **characterized in that**, as a function of the current operating state of the hybrid drive and/or as a function of the current operating state of the electric energy store (11) and/or as a function of the current operating state of the at least one secondary power take-off (7, 8),
- an energy balance is determined over the entire drive train, and
- on the basis of the determined energy balance energy which is not required at the power take-off is stored appropriately in the electric energy store (11) and/or in the secondary power take-off (7, 8) by bypassing the electric energy store (11), taking into account
- the efficiency of the internal combustion engine (1), of the electric machine (2), of the electric energy store (11) and of the at least one secondary power take-off (7, 8) and
- the storage capacity and state variables of the energy store as well as the functional capability limits of the at least one secondary power take-off,
in such a way that an optimum overall efficiency level of the drive train is ensured.

2. Method according to Claim 1, **characterized in that** when the secondary power take-off (7, 8) is a cooling assembly (15) which serves to cool a cooling space (16), energy which is not required at the power take-off (3) is used, by bypassing the electric energy store (11), by the cooling assembly (15) to cool the cooling space (16) within permissible temperature limits, in order thereby to store thermally in the cooling space (16) the energy which is not required at the power take-off.

3. Method according to Claim 1, **characterized in that** when the secondary power take-off (7, 8) is a cooling fan which serves to cool an internal combustion engine (1), energy which is not required at the power take-off (3) is used, by bypassing the electric energy store (11), by the cooling fan to cool the internal combustion engine (1) within permissible temperature limits, in order thereby to use thermally for cooling the internal combustion engine the energy which is not required at the power take-off (3).

4. Method according to Claim 1, **characterized in that** when the secondary power take-off (7, 8) is a heating assembly which serves to heat an internal combustion engine (1), energy which is not required at the power take-off (3) is used, by bypassing the electric energy store (11), by the heating assembly to heat the internal combustion engine (1) within permissible temperature limits, in order thereby to use thermally for heating the internal combustion engine the energy which is not required at the power take-off (3).

5. Method according to Claim 1, **characterized in that** when the secondary assembly (7, 8) is an air conditioning device which serves to heat or cool a passenger compartment, energy which is not required at the power take-off (3) is used, by bypassing the electric energy store (11), by the air conditioning device to heat or cool the passenger compartment within permissible temperature limits, in order thereby to use in the passenger compartment the energy which is not required at the power take-off (3).

6. Method according to Claim 1, **characterized in that** when the secondary power take-off (7, 8) is a hydraulically or pneumatically activated secondary power take-off (7, 8), energy which is not required at the power take-off (3) is used, by bypassing the electric energy store (11), to increase a working pressure within permissible pressure limits in a hydraulic accumulator (14) or a pneumatic accumulator of the secondary power take-off (7, 8).

7. Method according to one of the preceding claims, **characterized in that** a load operating point of the internal combustion engine (1) is raised on the basis of the energy balance.

8. Method according to Claim 7, **characterized in that** no further energy is fed to the respective secondary power take-off (7, 8) on the basis of the energy balance at high velocities within the permissible functional capability limits of said secondary power take-off (7, 8).

## Revendications

1. Procédé pour faire fonctionner une chaîne cinématique d'un véhicule automobile, dans lequel la chaîne cinématique présente, en tant que groupe motopropulseur, un entraînement hybride avec un moteur à combustion interne (1) et une machine électrique (2), un accumulateur d'énergie électrique (11) pouvant être chargé en mode de générateur de la machine électrique (2) de l'entraînement hybride et pouvant être déchargé en mode de moteur de la machine électrique (2) de l'entraînement hybride, une transmission (4) montée entre l'entraînement hybride et une prise de force (3) et au moins une prise de force auxiliaire (7, 8) du côté de la transmission et/ou du côté du groupe motopropulseur, l'au moins une prise de force auxiliaire (7, 8) pouvant être entraînée à l'intérieur de limites de fonctionnalité dépendant de la prise de force auxiliaire (7, 8) avec un besoin en énergie variable, **caractérisé en ce qu'**en fonction de l'état de fonctionnement actuel de l'entraînement hybride et/ou en fonction de l'état de fonctionnement actuel de l'accumulateur d'énergie électrique (11) et/ou en fonction de l'état de fonctionnement actuel de l'au moins une prise de force auxiliaire (7, 8),
- un bilan énergétique est déterminé sur l'ensemble de la chaîne cinématique et
- sur la base du bilan énergétique déterminé, l'énergie non nécessaire au niveau de la prise de force est stockée en tenant compte
- du rendement du moteur à combustion interne (1), de la machine électrique (2), de l'accumulateur d'énergie électrique (11) ainsi que de l'au moins une prise de force auxiliaire (7, 8), et
- de la capacité de stockage et des grandeurs d'état de l'accumulateur d'énergie ainsi que des limites de fonctionnalité de l'au moins une prise de force auxiliaire,
de manière correspondante dans l'accumulateur d'énergie électrique (11) et/ou en contournant l'accumulateur d'énergie électrique (11) dans la prise de force auxiliaire (7, 8), de telle sorte qu'un rendement total optimal de la chaîne cinématique soit garanti.

2. Procédé selon la revendication 1, **caractérisé en ce que** lorsque la prise de force auxiliaire (7, 8) est un groupe de refroidissement (15) servant au refroidissement d'un espace de refroidissement (16), l'énergie non nécessaire au niveau de la prise de force (3) est utilisée en contournant l'accumulateur d'énergie électrique (11) par le groupe de refroidissement (15) pour refroidir l'espace de refroidissement (16) dans des limites de température admissibles, afin d'accumuler l'énergie non nécessaire au niveau de la prise de force sous forme thermique dans l'espace de refroidissement (16).

3. Procédé selon la revendication 1, **caractérisé en ce que** lorsque la prise de force auxiliaire (7, 8) est un ventilateur de refroidissement servant au refroidissement d'un moteur à combustion interne (1), l'énergie non nécessaire au niveau de la prise de force (3) est utilisée en contournant l'accumulateur d'énergie électrique (11) par le ventilateur de refroidissement pour refroidir le moteur à combustion interne (1) dans des limites de température admissibles, afin d'utiliser l'énergie non nécessaire au niveau de la prise de force (3) de manière thermique pour le refroidissement du moteur à combustion interne.

4. Procédé selon la revendication 1, **caractérisé en ce que** lorsque la prise de force auxiliaire (7, 8) est un groupe de chauffage servant au chauffage d'un moteur à combustion interne (1), l'énergie non nécessaire au niveau de la prise de force (3) est utilisée en contournant l'accumulateur d'énergie électrique (11) par le groupe de chauffage pour chauffer le moteur à combustion interne (1) dans des limites de température admissibles, afin d'utiliser l'énergie non nécessaire au niveau de la prise de force (3) de manière thermique pour le chauffage du moteur à combustion interne.

5. Procédé selon la revendication 1, **caractérisé en ce que** lorsque la prise de force auxiliaire (7, 8) est un appareil de climatisation servant au chauffage ou au refroidissement d'un habitacle de conduite, l'énergie non nécessaire au niveau de la prise de force (3) est utilisée en contournant l'accumulateur d'énergie électrique (11) par l'appareil de climatisation pour le chauffage ou le refroidissement de l'habitacle de conduite dans des limites de température admissibles, afin d'utiliser l'énergie non nécessaire au niveau de la prise de force (3) dans l'habitacle de conduite.

6. Procédé selon la revendication 1, **caractérisé en ce que** lorsque la prise de force auxiliaire (7, 8) est une prise de force auxiliaire (7, 8) à commande hydraulique ou pneumatique, l'énergie non nécessaire au niveau de la prise de force (3) est utilisée en contournant l'accumulateur d'énergie électrique (11) pour augmenter une pression de travail à l'intérieur de limites de pression admissibles dans un accumulateur hydraulique (14) ou dans un accumulateur pneumatique de la prise de force auxiliaire (7, 8).

7. Procédé selon l'une quelconque des revendications précédentes, **caractérisé en ce que** sur la base du bilan énergétique, un point de fonctionnement en charge du moteur à combustion interne (1) est augmenté.

8. Procédé selon la revendication 7, **caractérisé en ce que** sur la base du bilan énergétique à des vitesses de conduite élevées, à l'intérieur de limites de fonctionnalité admissibles de la prise de force auxiliaire respective (7, 8), aucune énergie supplémentaire n'est acheminée à cette dernière.
